# EUROPEAN PATENT SPECIFICATION

(11) **EP 3 385 593 B1**
(45) Date of publication and mention of the grant of the patent: **27.01.2021**
(21) Application number: 18166015.0
(22) Date of filing: 06.04.2018
(51) Int. Cl.: F16L 47/02, F16L 47/06, B65D 88/76

(54) **METHOD AND ASSEMBLY FOR CENTERING A SPIGOT TO A SOCKET**
VERFAHREN UND ANORDNUNG ZUR ZENTRIERUNG EINES ZAPFENS AN EINER MUFFE
PROCÉDÉ ET ENSEMBLE PERMETTANT DE CENTRER UN ERGOT SUR UNE DOUILLE

(30) Priority: 07.04.2017 FI 20175326
(43) Date of publication of application: 10.10.2018
(73) Proprietor: Uponor Infra Oy, 01510 Vantaa (FI)
(72) Inventor: ULMANEN, Harri, 01510 Vantaa (FI)
(74) Representative: Laine IP Oy

(56) References cited:
- CH-A5- 661 109
- JP-A- H07 145 899
- US-A1- 2008 099 490
- US-A1- 2016 091 131

## Description

### FIELD

The invention relates to a method and assembly for forming a pipe and collecting chamber joint.

### BACKGROUND

Spigot and socket joints are common in joining tubular plastic parts together. These parts can be made by using various manufacturing methods. Each of these methods has characteristic manufacturing tolerances. Especially for larger parts the tolerance range may be wide. When two such parts are joined together, the actual difference between the dimensions of the parts is sum of the differences of the actual dimensions form the nominal dimensions. This may lead to large gaps between parts that are to be joined together. If the gap is too large, it makes joining the parts, for example by welding, difficult. One typical spigot and socket joint for plastic parts is joining large water chambers to pipes, for example a pipe as a riser to a chamber. The Riser pipe can be e.g. smooth solid wall pipe, corrugated pipe, ribbed pipe, Weholite-type profile pipe or other structural pipe.Chambers used in such systems are typically made by rotation molding, blow molding or injection molding.The chamber riser includes a riser socket having a slightly larger diameter than the pipe to be joined to it so that he pipe can be inserted to the socket. When the spigot pipe is inserted to the socket, they are usually attached permanently to each other. One usual attachment method is welding. The gap between the socket and the spigot has to be small enough to enable successful welding. The width of the gap should be equal in whole perimeter around the socket and pipe so that attachment of socket to spigot can be made with good quality.

Document CH 661109 A5 discloses connection of pipes. A pipe end is inserted into a part of a moulding in the form of a socket. Adhesive is subsequently introduced through openings into an annular chamber.

Document US 2016/091131 A1 describes a pipe fitting including a tubular member comprising a socket and a centering device within the socket. The socket is configured to receive an end of a pipe section therein such that a gap exists between an outer surface of the pipe section and an inner surface of the socket. An annular pipe stop extends from the inner surface of the socket and is configured to matingly engage with the end of the pipe section. A pair of ports extends through the tubular member in circumferentially spaced-apart relationship and is in fluid communication with the gap. The centering device is configured to maintain a coaxial relationship between the pipe section and the socket and such that the gap is substantially circumferentially uniform.

Document JP H07145899 A teaches formation of a weld coupling such that a coupling body is formed of thermoplastic resin and a heating element is disposed to the inner peripheral part of the coupling body. Centering ribs are protruded from the inner peripheral surface of the coupling body. A plurality of the centering ribs are formed in parallel to an axial direction in a state to be separated away from each other at 180 deg. or less.

Document US 2008/099490 A1 discloses an attached sump collar for an underground storage tank (UST) providing a flat surface for a connection with a fixture from the UST. Connecting the fixture at a flat surface of the sump collar advantageously improves the efficiency of the seal between the collar and the fixture. The connection may be made at a nearly right angle.

### SUMMARY OF THE INVENTION

The invention is defined by the features of the independent claims. Some specific embodiments are defined in the dependent claims.

According to a first aspect of the present invention, there is provided a method for forming a pipe and collecting chamber joint, the method comprising providing a pipe having a circular outer surface with an outer diameter, providing a collection chamber including a socket comprising a tubular extension having a circular inner surface with an inner diameter that is larger than the outer diameter of the pipe, the circular inner surface including at least three centering ribs extending therefrom and spaced apart from each other in circumferential direction of the circular inner surface of the socket, wherein the collecting chamber and the socket are formed by injection molding or blow molding, fitting the pipe inside the socket, and attaching the pipe and socket are attached to each other to form the joint.

According to an embodiment of the present invention, the method further comprises providing a plurality of stoppers spaced apart from each other in circumferential direction of the circular inner surface of the socket, wherein the stoppers extend from the circular inner surface of the tubular extension.

According to an embodiment of the present invention, the stoppers are located at even or non-even distances from each other.

According to an embodiment of the present invention, the stoppers extend only partially over the circumference of the socket.

According to a second aspect of the present invention, there is provided an assembly for forming a pipe and collecting chamber joint, the assembly comprising a pipe having a circular outer surface with an outer diameter, a collecting chamber including a socket comprising a tubular extension having a circular inner surface with an inner diameter that is larger than the outer diameter of the pipe, the circular inner surface including at least three centering ribs extending therefrom and spaced apart from each other in circumferential direction of the circular inner surface of the socket, wherein the collecting chamber and the socket are formed by injection molding or blow molding, and wherein the pipe is fitted inside the socket, and wherein the pipe is attached to the socket to form the joint.

According to an embodiment of the present invention, the socket has a length defined by an outer edge of the circular inner surface of the tubular extension and at least one stopper extending from the circular inner surface of the socket and the centering ribs extend only partially over the distance between the edge of the tubular extension and the at least one stopper so that the ends of the of the ribs closest to the outer edge of the tubular extension are at a distance from the outer edge of the tubular extension.

According to an embodiment of the present invention, a plurality of stoppers spaced apart from each other in circumferential direction of the circular inner surface of the socket is provided.

According to an embodiment of the present invention, the stoppers are located at even or non-even distances from each other.

According to an embodiment of the present invention, the stoppers extend only partially over the circumference of the socket.

According to an embodiment of the present invention, the ends of the centering ribs extend gradually away from the inner surface of the socket so that the ends closest to the edge of the tubular extension are flush with the inner surface of the socket at least at the outer edge of the tubular extension.

According to an embodiment of the present invention, the centering ribs are connected to the at least one stopper.

According to an embodiment of the present invention, the centering ribs and stoppers are spaced apart from each other in circumferential direction of the circular inner surface of the socket so that centering ribs and stoppers are at different places circumferentially.

According to an embodiment of the present invention, the pipe and the collecting chamber including the socket are made of polyethylene (PE), polypropylene (PP) or PVC.

### BRIEF DESCRIPTION OF THE DRAWINGS

FIGURE 1 illustrates a socket in accordance with at least some embodiments of the present invention;
FIGURE 2 illustrates a detail of a spigot/socket joint in accordance with at least some embodiments of the invention.
FIGURE 3 illustrates an example apparatus capable of supporting at least some embodiments of the present invention.

### EMBODIMENTS

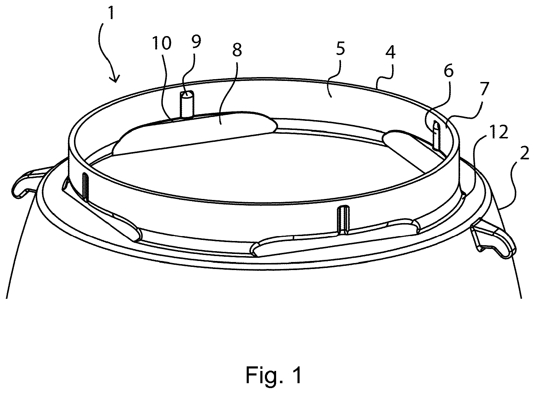

The invention relates to manufacture and assembly of spigot and socket joints especially when the parts to be joined are large plastic components. Such large plastic parts have manufacturing tolerances that make joining them together sometimes challenging. Various joining methods have specific requirements for example for gaps between the parts to be joined. One such method is welding, that is widely used in manufacture of plastic components like containers, chambers and pipes made of polyethylene (PE), polypropylene (PP) or PVC. If the gap between the parts is too wide or the width varies, assembly and joining is difficult. The method and assembly according to various embodiments of invention aids the assembly spigot and socket joints. FIGURE 1 illustrates a socket 1 of a chamber 2 for connecting a riser 3 to the chamber 2 in accordance with at least some embodiments of the present invention. The chamber 2 in this example is a collecting or connecting chamber of a municipal water system. The riser 3 connects the chamber 2 to a flow route above. The socket 1 comprises a tubular extension 4 having a circular inner surface 5. Circular form is advantageous herein as one method for manufacturing chamber-like products is rotation moulding that suits well for symmetric products. Rotation molding allows very wide range of product shapes. The advantage of rotation molding is in making big hollow products as it does not require cores to be removed from inside of the product. The circular form also conforms to circular pipes and tubes that are probably the most common profile of pipes used. The inner diameter of the inner circular surface 5 is larger than the outer diameter of the riser 3 that in this example is the spigot of the joint. The riser 3 fits in the tubular extension 4 of the socket 1. The circular inner surface 5 includes at least three centering ribs 6 extending upwards from the circular inner surface 5. In this example the number of centering ribs 6 is four and they are spaced apart from each other in circumferential direction of the circular inner surface 5 of the socket 1. The spacing is 90° in rotational direction of the circular inner surface 5 so that the centering ribs 6 are spaced in regular intervals. As the purpose of the centering ribs 6 is to position a riser 3 (spigot) to the tubular extension 4, the minimum number of centering ribs 6 is three. Four or more centering ribs 6 can be used to give more support around the riser 3.

The socket 1 has a length defined by an outer edge 7 of the circular inner surface 5 of the tubular extension 4 and at least one stopper 8 extending from the circular inner surface 5 of the tubular extension 4 and the centering ribs 6 extend only partially over the distance between the outer edge 7 of the tubular extension 4 and the at least one stopper 8 so that the ends 9 of the of the centering ribs 6 closest to the outer edge 7 of the circular inner surface 5 of the tubular extension 4 are at a distance from the outer edge 7 of the circular inner surface 5 of the tubular extension 4. The stoppers 8 are, for example, round tube-like extensions extending from the circular inner surface 5. On the side of the stoppers 8 that is towards the outer edge 7 of the circular inner surface 5 is a flat contact surface 10 for stopping the edge of the riser 3 when the riser 3 is mounted on the socket 1. In this example the number of stoppers 8 is four and they are positioned circumferentially at same locations as the centering ribs 6. This provides good support. The locations and number of the stoppers 8 may vary. They may even be located at non-even distances from each other as can the centering ribs 6. The stoppers 8 extend only partially over the circumference of the socket 1. In this way the junction 12 between the socket 1 and the chamber 2 is more rigid and can withstand axial loads.

In the embodiment of FIGURE 1 ends 9 the centering ribs 6 are rounded and the centering ribs 6 are shorter than the length of the circular inner surface 5 so that the ends 9 are at a distance from the outer edge 7 of the circular inner surface 5. This facilitates fitting the spigot (riser 3) to the socket 1. The centering function of the centering ribs 6 is achieved even if the centering ribs 6 extend only partially over the circular inner surface 5 and the end of a spigot. The centering ribs 6 may have other forms. According to one embodiment of the invention the centering ribs 6 extend gradually away from the inner surface of the socket so that the ends 9 closest to the outer edge 7 of the circular inner surface 5 tubular extension 4 are flush with the circular inner surface 5 of the tubular extension 4 of the socket at least at the outer edge 7. The gradually extending part may be straight or curved. The ends 9 may even extend fully to the outer edge 7 of the circular inner surface 5. The centering ribs 6 may be connected to the stoppers 8 or be separate from them.

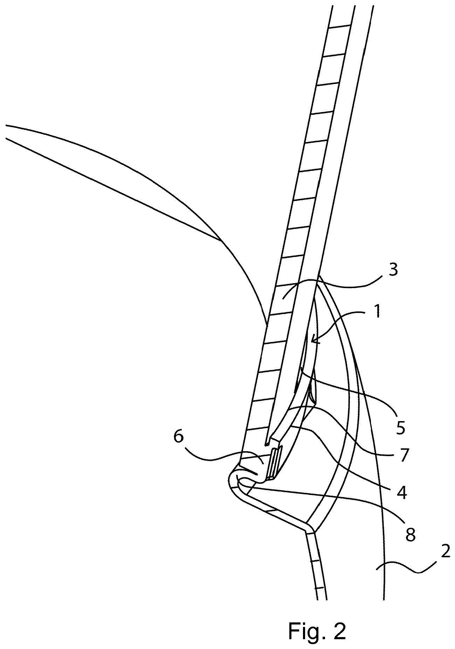

FIGURE 2 is a cross section of a joint formed by the socket 1 of FIGURE 1 and a tubular tube forming a riser 3. The riser 3 is the spigot herein. As can be seen, the end of the riser 3 rests on the contact surface 10 of the stopper 8. The centering ribs 6 hold the outer surface of the riser 3 at a same distance from the circular inner surface 5 of the tubular extension 4 and the outer edge 7. This way the difference between the dimensions of the riser and the inner circular surface 5 of the tubular extension is divided evenly over the circumference of the socket 1. The gap between the parts is kept in minimum whereby attaching parts together, for example by welding is facilitated.

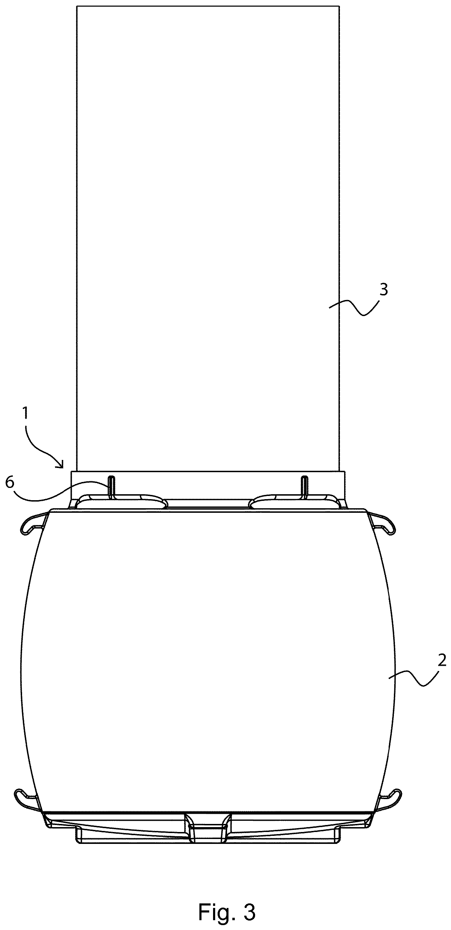

FIGURE 3 illustrates an example apparatus capable of supporting at least some embodiments of the present invention. A riser 3 formed of a tube is joined to a chamber 2. The chamber 2 may be a rotational moulded PE, PP of PVC chamber and the riser 3 a tube made of PE, PP orPVC. Other manufacturing methods comprise injection molding and blow molding, for example.

Problems in chamber assemblies illustrated in FIGURE 3 can be caused by large tolerance fluctuation (for example, with rotation moulded products and chamber pipes). By using at least some of the embodiments of the invention a spigot (riser 3) part can be centred evenly to socket 1 part and attached firmly on correct position and place prior to welding. For example in nominal size of 500 mm, rotation molding tolerance is approx. +- 2 mm and riser pipe tolerance range is +- 2,5 mm. For socket- spigot system this tolerance range in total is then +- 4,5 mm. This wide tolerance range sets challenges for assembly work made by welding, as the gap between components can be in minimum 0 mm and maximally 9 mm if the parts are not properly centred in relation to each other.

In one embodiment, chamber socket 1 has (4pcs) of narrow centering ribs 6 which purpose is to reduce negative effects of wide above exemplified tolerance range. Because of the centering ribs 6, spigot (riser 3) is centred to socket 1 of the chamber 2 also when gap between components is the largest. When the gap is smallest possible, socket 1 and spigot (riser 3) flex a little, so that installation is possible. To ease up the installation of spigot to socket 1, cantering ribs 6 are located on bottom of socket 1. Socket 1 entrance doesn't have centering ribs. Because of cantering ribs 6, the riser 3 is positioned more firmly in socket 1 prior to welding, which also ease up assembly work. When the assembly is made, the spigot is fitted inside the socket and the spigot and socket are attached to each other for example by welding to form the joint.

It is to be understood that the embodiments of the invention disclosed are not limited to the particular structures, process steps, or materials disclosed herein, but are extended to equivalents thereof as would be recognized by those ordinarily skilled in the relevant arts. It should also be understood that terminology employed herein is used for the purpose of describing particular embodiments only and is not intended to be limiting.

Reference throughout this specification to "one embodiment" or "an embodiment" means that a particular feature, structure, or characteristic described in connection with the embodiment is included in at least one embodiment of the present invention. Thus, appearances of the phrases "in one embodiment" or "in an embodiment" in various places throughout this specification are not necessarily all referring to the same embodiment.

As used herein, a plurality of items, structural elements, compositional elements, and/or materials may be presented in a common list for convenience. However, these lists should be construed as though each member of the list is individually identified as a separate and unique member. Thus, no individual member of such list should be construed as a de facto equivalent of any other member of the same list solely based on their presentation in a common group without indications to the contrary. In addition, various embodiments and example of the present invention may be referred to herein along with alternatives for the various components thereof. It is understood that such embodiments, examples, and alternatives are not to be construed as de facto equivalents of one another, but are to be considered as separate and autonomous representations of the present invention.

Furthermore, the described features, structures, or characteristics may be combined in any suitable manner in one or more embodiments. In the following description, numerous specific details are provided, such as examples of lengths, widths, shapes, etc., to provide a thorough understanding of embodiments of the invention. One skilled in the relevant art will recognize, however, that the invention can be practiced without one or more of the specific details, or with other methods, components, materials, etc. In other instances, well-known structures, materials, or operations are not shown or described in detail to avoid obscuring aspects of the invention.

While the forgoing examples are illustrative of the principles of the present invention in one or more particular applications, it will be apparent to those of ordinary skill in the art that numerous modifications in form, usage and details of implementation can be made without the exercise of inventive faculty, and without departing from the principles and concepts of the invention. Accordingly, it is not intended that the invention be limited, except as by the claims set forth below.

### INDUSTRIAL APPLICABILITY

The invention has industrial applicability at least in infrastructure sewer and storm water pipes but its use is not limited to these areas.

### REFERENCE SIGNS LIST

- 1: socket
- 2: chamber
- 3: riser
- 4: tubular extension
- 5: circular inner surface
- 6: centering rib
- 7: outer edge
- 8: stopper
- 9: end
- 10: contact surface
- 12: junction

## Claims

1. A method for forming a pipe (3) and collecting chamber (2) joint, the method comprising:
- providing a pipe having a circular outer surface with an outer diameter;
- providing a collecting chamber (2) including a socket (1) comprising a tubular extension (4) having a circular inner surface (5) with an inner diameter that is larger than the outer diameter of the pipe (3), the circular inner surface (5) including at least three centering ribs (6) extending therefrom and spaced apart from each other in circumferential direction of the circular inner surface (5) of the socket (1), wherein the collecting chamber (2) and the socket (1) are formed by injection molding or blow molding,
- fitting the pipe (3) inside the socket (1), and
- attaching the pipe (3) and socket (1) to each other to form the joint.

2. The method according to claim 1, the method further comprising:
- providing a plurality of stoppers (8) spaced apart from each other in circumferential direction of the circular inner surface (5) of the socket (1), wherein the stoppers (8) extend from the circular inner surface (5) of the tubular extension (4).

3. The method according to claim 2, wherein the stoppers (8) are located at even or non-even distances from each other.

4. The method according to claim 2 or 3, wherein the stoppers (8) extend only partially over the circumference of the socket (1).

5. An assembly for forming a pipe and collecting chamber joint, the assembly comprising:
- a pipe (3) having a circular outer surface with an outer diameter,
- a collecting chamber (2) including a socket (1) comprising a tubular extension (4) having a circular inner surface (5) with an inner diameter that is larger than the outer diameter of the pipe, the circular inner surface (5) including at least three centering ribs (6) extending therefrom and spaced apart from each other in circumferential direction of the circular inner surface (5) of the tubular extension (4) of the socket (1), wherein the collecting chamber (2) and the socket are formed by injection molding or blow molding, and wherein the pipe (3) is fitted inside the socket (1), and wherein the pipe is attached to the socket (1) to form the joint.

6. The assembly according to claim 5, wherein
- the socket (1) has a length defined by an outer edge (7) of the circular inner surface (5) of the tubular extension (4) and at least one stopper (8) extending from the circular inner surface (5) of the tubular extension (4) of the socket (1), and
- the centering ribs (6) extend only partially over the distance between the outer edge (7) of the circular inner surface (5) of the tubular extension (4) and the at least one stopper (8) so that the ends (9) of the of the ribs (6) closest to the outer edge (7) of the circular inner surface (5) of the tubular extension (4) are at a distance from the outer edge (7) of the circular inner surface (5) of the tubular extension (4).

7. The assembly according to claim 6, wherein a plurality of stoppers (8) spaced apart from each other in circumferential direction of the circular inner surface (5) of the socket (1) is provided.

8. The assembly according to claim 7, wherein the stoppers (8) are located at even or non-even distances from each other.

9. The assembly according to claim 7 or 8, wherein the stoppers (8) extend only partially over the circumference of the socket (1).

10. An assembly according to any one of claims 5-9, wherein the ends (9) of the centering ribs (6) extend gradually away from the circular inner surface (5) of the tubular extension (4) of the socket (1) so that the ends (9) closest to the outer edge (7) of the circular inner surface (5) of the tubular extension (4) are flush with the circular inner surface (5) of the tubular extension (4) of the socket (1) at least at the outer edge (7) of the circular inner surface (5) of the tubular extension (4).

11. An assembly according to any of the claims 6 - 9, wherein the centering ribs (6) are connected to the at least one stopper (8).

12. An assembly according to any of the claims 6 - 9, wherein the centering ribs (6) and stoppers (8) are spaced apart from each other in circumferential direction of the circular inner surface (5) of the socket (1) so that centering ribs (6) and stoppers (8) are at different places circumferentially.

13. An assembly according to any of the claims 5 - 12, wherein, the pipe (3) and the collecting chamber (2) including the socket (1) are made of polyethylene (PE), polypropylene (PP) or Polyvinyl chloride (PVC).

## Patentansprüche

1. Verfahren zum Bilden einer Verbindungsstelle zwischen einem Rohr (3) und einer Sammelkammer (2), wobei das Verfahren umfasst:
- Bereitstellen eines Rohrs mit einer kreisförmigen Außenfläche mit einem Außendurchmesser;
- Bereitstellen einer Sammelkammer (2), welche eine Muffe (1) beinhaltet, welche eine rohrförmige Erweiterung (4) mit einer kreisförmigen Innenfläche (5) mit einem Innendurchmesser aufweist, welcher größer ist als der Außendurchmesser des Rohrs (3), wobei die kreisförmige Innenfläche (5) zumindest drei Zentrierrippen (6) beinhaltet, welche sich daraus erstrecken und in einer Umfangsrichtung der kreisförmigen Innenfläche (5) der Muffe (1) voneinander beabstandet sind, wobei die Sammelkammer (2) und die Muffe (1) durch Spritzgießen oder Blasformen gebildet werden,
- Einpassen des Rohrs (3) innerhalb der Muffe (1), und
- Befestigen des Rohrs (3) und der Muffe (1) aneinander, um die Verbindungsstelle zu bilden.

2. Verfahren nach Anspruch 1, wobei das Verfahren weiter umfasst:
- Bereitstellen einer Vielzahl von Anschlägen (8) welche in Umfangsrichtung der kreisförmigen Innenfläche (5) der Muffe (1) voneinander beabstandet sind, wobei die Anschläge (8) sich von der kreisförmigen Innenfläche (5) der rohrförmigen Erweiterung (4) erstrecken.

3. Verfahren nach Anspruch 2, wobei die Anschläge (8) sich in gleichen oder ungleichen Abständen voneinander befinden.

4. Verfahren nach Anspruch 2 oder 3, wobei die Anschläge (8) sich nur teilweise über den Umfang der Muffe (1) erstrecken.

5. Anordnung zum Bilden einer Verbindungsstelle zwischen einem Rohr und einer Sammelkammer, wobei die Anordnung umfasst:
- ein Rohr (3) mit einer kreisförmigen Außenfläche mit einem Außendurchmesser,
- eine Sammelkammer (2), welche eine Muffe (1) beinhaltet, welche eine rohrförmige Erweiterung (4) mit einer kreisförmigen Innenfläche (5) mit einem Innendurchmesser aufweist, welcher größer ist als der Außendurchmesser des Rohrs, wobei die kreisförmige Innenfläche (5) zumindest drei Zentrierrippen (6) beinhaltet, welche sich daraus erstrecken und in einer Umfangsrichtung der kreisförmigen Innenfläche (5) der rohrförmigen Erweiterung (4) der Muffe (1) voneinander beabstandet sind, wobei die Sammelkammer (2) und die Muffe durch Spritzgießen oder Blasformen gebildet werden, und wobei das Rohr (3) innerhalb der Muffe (1) eingepasst ist, und wobei das Rohr an der Muffe (1) befestigt, um die Verbindungsstelle zu bilden.

6. Anordnung nach Anspruch 5, wobei
- die Muffe (1) eine Länge aufweist, welche durch einen äußeren Rand (7) der kreisförmigen Innenfläche (5) der rohrförmigen Erweiterung (4) und zumindest einen Anschlag (8), welcher sich von der kreisförmigen Innenfläche (5) der rohrförmigen Erweiterung (4) der Muffe (1) erstreckt, definiert ist, und
- die Zentrierrippen (6) sich nur teilweise über den Abstand zwischen dem äußeren Rand (7) der kreisförmigen Innenfläche (5) der rohrförmigen Erweiterung (4) und dem zumindest einen Anschlag (8) erstrecken, sodass die Enden (9) der dem äußeren Rand (7) der kreisförmigen Innenfläche (5) der rohrförmigen Erweiterung (4) am nächsten Rippen (6) sich in einem Abstand von dem äußeren Rand (7) der kreisförmigen Innenfläche (5) der rohrförmigen Erweiterung (4) befinden.

7. Anordnung nach Anspruch 6, wobei eine Vielzahl von Anschlägen (8) bereitgestellt ist, welche in Umfangsrichtung der kreisförmigen Innenfläche (5) der Muffe (1) voneinander beabstandet sind.

8. Anordnung nach Anspruch 7, wobei die Anschläge (8) sich in gleichen oder ungleichen Abständen voneinander befinden.

9. Anordnung nach Anspruch 7 oder 8, wobei die Anschläge (8) sich nur teilweise über den Umfang der Muffe (1) erstrecken.

10. Anordnung nach einem der Ansprüche 5-9, wobei die Enden (9) der Zentrierrippen (6) sich allmählich weg von der kreisförmigen Innenfläche (5) der rohrförmigen Erweiterung (4) der Muffe (1) erstrecken, sodass die dem äußeren Rand (7) der kreisförmigen Innenfläche (5) der rohrförmigen Erweiterung (4) am nächsten Enden (9) zumindest an dem äußeren Rand (7) der kreisförmigen Innenfläche (5) der rohrförmigen Erweiterung (4) bündig mit der kreisförmigen Innenfläche (5) der rohrförmigen Erweiterung (4) der Muffe (1) sind.

11. Anordnung nach einem der Ansprüche 6-9, wobei die Zentrierrippen (6) mit dem zumindest einen Anschlag (8) verbunden sind.

12. Anordnung nach einem der Ansprüche 6-9, wobei die Zentrierrippen (6) und Anschläge (8) in Umfangsrichtung der kreisförmigen Innenfläche (5) der Muffe (1) voneinander beabstandet sind, sodass die Zentrierrippen (6) und Anschläge (8) sich ringsum an unterschiedlichen Orten befinden.

13. Anordnung nach einem der Ansprüche 5-12, wobei das Rohr (3) und die Sammelkammer (2) einschließlich der Muffe (1) aus Polyethylen (PE), Polypropylen (PP) oder Polyvinylchlorid (PVC) hergestellt sind.

## Revendications

1. Procédé de formation d'une jonction de tuyau (3) et chambre de collecte (2), le procédé comprenant :
- la fourniture d'un tuyau ayant une surface externe circulaire avec un diamètre externe ;
- la fourniture d'une chambre de collecte (2) incluant une douille (1) comprenant une extension tubulaire (4) ayant une surface interne circulaire (5) avec un diamètre interne qui est plus grand que le diamètre externe du tuyau (3), la surface interne circulaire (5) incluant au moins trois nervures de centrage (6) s'étendant à partir de celle-ci et espacées les unes des autres dans la direction circonférentielle de la surface interne circulaire (5) de la douille (1), dans lequel la chambre de collecte (2) et la douille (1) sont formées par moulage par injection ou moulage par soufflage,
- l'ajustement du tuyau (3) à l'intérieur de la douille (1), et
- la fixation du tuyau (3) et de la douille (1) l'un à l'autre pour former la jonction.

2. Procédé selon la revendication 1, le procédé comprenant en outre :
- la fourniture d'une pluralité de butées (8) espacées les unes des autres dans la direction circonférentielle de la surface interne circulaire (5) de la douille (1), dans lequel les butées (8) s'étendent à partir de la surface interne circulaire (5) de l'extension tubulaire (4).

3. Procédé selon la revendication 2, dans lequel les butées (8) sont situées à des distances égales ou inégales les unes des autres.

4. Procédé selon la revendication 2 ou 3, dans lequel les butées (8) s'étendent uniquement partiellement sur la circonférence de la douille (1).

5. Ensemble destiné à former une jonction de tuyau et chambre de collecte, l'ensemble comprenant :
- un tuyau (3) ayant une surface externe circulaire avec un diamètre externe,
- une chambre de collecte (2) incluant une douille (1) comprenant une extension tubulaire (4) ayant une surface interne circulaire (5) avec un diamètre interne qui est plus grand que la diamètre externe du tuyau, la surface interne circulaire (5) incluant au moins trois nervures de centrage (6) s'étendant à partir de celle-ci et espacées les unes des autres dans la direction circonférentielle de la surface interne circulaire (5) de l'extension tubulaire (4) de la douille (1), dans lequel la chambre de collecte (2) et la douille sont formées par moulage par injection ou moulage par soufflage, et dans lequel le tuyau (3) est ajusté à l'intérieur de la douille (1), et dans lequel le tuyau est fixé à la douille (1) pour former la jonction.

6. Ensemble selon la revendication 5, dans lequel
- la douille (1) a une longueur définie par un bord externe (7) de la surface interne circulaire (5) de l'extension tubulaire (4) et au moins une butée (8) s'étendant à partir de la surface interne circulaire (5) de l'extension tubulaire (4) de la douille (1), et
- les nervures de centrage (6) s'étendent uniquement partiellement sur la distance entre le bord externe (7) de la surface interne circulaire (5) de l'extension tubulaire (4) et l'au moins une butée (8) de sorte que les extrémités (9) des nervures (6) les plus proches du bord externe (7) de la surface interne circulaire (5) de l'extension tubulaire (4) sont à une distance du bord externe (7) de la surface interne circulaire (5) de l'extension tubulaire (4).

7. Ensemble selon la revendication 6, dans lequel il est prévu une pluralité de butées (8) espacées les unes des autres dans la direction circonférentielle de la surface interne circulaire (5) de la douille (1).

8. Ensemble selon la revendication 7, dans lequel les butées (8) sont situées à des distances égales ou inégales les unes des autres.

9. Ensemble selon la revendication 7 ou 8, dans lequel les butées (8) s'étendent uniquement partiellement sur la circonférence de la douille (1).

10. Ensemble selon l'une quelconque des revendications 5-9, dans lequel les extrémités (9) des nervures de centrage (6) s'écartent progressivement de la surface interne circulaire (5) de l'extension tubulaire (4) de la douille (1) de sorte que les extrémités (9) les plus proches du bord externe (7) de la surface interne circulaire (5) de l'extension tubulaire (4) sont en affleurement avec la surface interne circulaire (5) de l'extension tubulaire (4) de la douille (1) au moins au niveau du bord externe (7) de la surface interne circulaire (5) de l'extension tubulaire (4).

11. Ensemble selon l'une quelconque des revendications 6-9, dans lequel les nervures de centrage (6) sont reliées à l'au moins une butée (8).

12. Ensemble selon l'une quelconque des revendications 6-9, dans lequel les nervures de centrage (6) et les butées (8) sont espacées les unes des autres dans la direction circonférentielle de la surface interne circulaire (5) de la douille (1) de sorte que les nervures de centrage (6) et les butées (8) sont à des endroits différents circonférentiellement.

13. Ensemble selon l'une quelconque des revendications 5-12, dans lequel le tuyau (3) et la chambre de collecte (2) incluant la douille (1) sont constitués de polyéthylène (PE), de polypropylène (PP) ou de polychlorure de vinyle (PVC).
